# EUROPÄISCHE PATENTSCHRIFT

(11) **EP 1 072 898 B1**
(45) Veröffentlichungstag und Bekanntmachung des Hinweises auf die Patenterteilung: **15.09.2004**
(21) Anmeldenummer: 00115858.3
(22) Anmeldetag: 24.07.2000
(51) Int. Cl.: G01R 33/02, G01R 33/10

(54) **Vorrichtung zum Nachweis von lokalen Magnetfeldern**
Device for detecting local magnetic fields
Dispositif de détection de champs magnétiques locaux

(30) Priorität: 24.07.1999 DE 19934823
(43) Veröffentlichungstag der Anmeldung: 31.01.2001
(73) Patentinhaber: MTU Aero Engines GmbH, 80995 München (DE)
(72) Erfinder: Bamberg, Joachim, Dr., 85221 Dachau (DE); Mook, Gerhard, Dr., 39104 Magdeburg (DE)
(74) Vertreter: Einsele, Rolf W.

(56) Entgegenhaltungen:
- EP-A- 0 538 899
- EP-A- 0 562 681
- EP-A- 0 702 981
- EP-A- 0 794 428
- DE-A- 4 333 225

## Beschreibung

Die Erfindung betrifft eine Nachweisvorrichtung zum Nachweis von lokalen Magnetfeldern.

Der zerstörungsfreie Nachweis von Fehlern, insbesondere von offenen und verdeckten Rissen in metallischen Bauteilen, gewinnt zunehmend an Bedeutung. Dies liegt daran, daß Werkstoffe und Bauteile immer häufiger bis an ihre Belastungsgrenzen ausgelegt werden. Damit steigen die Anforderungen an die Qualitätskontrolle und an das Fehlernachweisvermögen zerstörungsfreier Prüfverfahren.

Zum zerstörungsfreien Nachweis von offenen und verdeckten Rissen in metallischen Werkstoffen ist die Wirbelstromprüfung seit nunmehr über 40 Jahren fest etabliert. Im Gegensatz zur Thermographieprüfung, die nur empfindlich auf horizontale Fehler (z.B. Delaminationen) reagiert, lassen sich mit der Wirbelstromprüfung senkrechte Risse empfindlich nachweisen.

Bei der Wirbelstromprüfung wird eine Tastspule über das Bauteil bewegt. Im Bauteil werden Wirbelströme erzeugt, durch deren Abklingen wiederum ein Magnetfeld induziert wird. Das lokale Magnetfeld wird Punkt für Punkt aufgezeichnet. Für eine flächendeckende Prüfung muß das Bauteil daher in einzelnen Prüfspuren abgescannt werden. Für ebene oder kreisförmige Bauteile sind zu diesem Zweck mechanische Scanner entwickelt worden. Beispielsweise aus der DE 196 42 981 A1 sind ein Verfahren und eine Vorrichtung zum Abtasten einer Bauteiloberfläche mittels einer Wirbelstromsonde bekannt.

Die durch CAD erstellten Bauteile und Komponenten zeichnen sich aber zunehmend durch komplexere Geometrien aus. Diese oft stark gekrümmten Bauteiloberflächen sind mit solchen Scannern nicht oder nur mit reduzierter Empfindlichkeit prüfbar. Bei Bauteilen komplexer Geometrie ist ein erheblicher Aufwand zur lückenlosen Überprüfung notwendig. Die Prüfzeit ist lang. Außerdem sind Bauteilecken und -kanten diesem Prüfverfahren nicht zugänglich.

Bei einer herkömmlichen Nachweisvorrichtung aus einer Verbundfolie handelt es sich bei der piezoelektrischen Schicht z.B. um eine Kunststoffschicht bestehend aus polarisiertem PVDF. Die ferromagnetische Schicht besteht aus Eisen, Kobalt oder Nickel. Wird die Nachweisvorrichtung einem lokalen Magnetfeld ausgesetzt, so wirkt eine Kraft auf die Metallschicht. Dies führt zu einer Verformung der piezoelektrischen Schicht. Dadurch werden innerhalb der piezoelektrischen Schicht Ladungsverschiebungen erzeugt, die die kapazitiven Sensoren nachweisen.

Aus der US 5,675,252 ist eine Sensor- und Meßeinrichtung für magnetische und elektrische Felder bekannt, die eine Verbundstruktur von Schichten aus piezoelektrischem Material und magnetostriktivem Material, wie Nickel, umfasst, wobei ein an der Verbundstruktur anliegendes magnetisches Feld zu Spannungen und Ladungsverschiebungen in der piezoelektrischen Schicht führt, welche erfasst werden.

Die EP 0 794 428 A1 offenbart einen Sensor für verdampfungsfähige Materialien und Gase, der Aromastoffe mit gleicher chemischer Zusammensetzung und spiegelbildlichem Strukturaufbau unterscheiden kann und aus einem Paar beabstandeter Elektroden und einem Halbleiterpolymer besteht, das sich in dem Raum zwischen den Elektroden erstreckt, wobei sich sein elektrischer Widerstand bei Adsorption verdampfungsfähiger Aromastoffe ändert und das Polymer chirale Stellen aufweist.

Ferner ist aus der EP 0 562 681 A2 piezoelektrisches Material bekannt, das als Halbzeug zum Beispiel für die Herstellung von Sensoren eingesetzt werden kann und zur Vergrößerung des piezoelektrischen Effekts aus einer Verbundstruktur, bei der zwischen zwei Elektroden ein dipolar ausgerichtetes, piezoelektrisches Material aus chiralen Komponenten vorgesehen ist, besteht.

Weitere Ausführungsformen kapazitiver Magnetfeldsensoren sind in EP0 702 981 A1 und EP0 538 899 A2 dargestellt.

Es ist Aufgabe der vorliegenden Erfindung, eine Nachweisvorrichtung zum Nachweis von lokalen Magnetfeldern anzugeben, die den Nachweis in einem flächigen Bereich mit hoher Ortsauflösung zuläßt, ohne daß eine Bewegung der Nachweiseinrichtung notwendig ist. Des weiteren soll die Vorrichtung möglichst einfach aufgebaut sein. Es wäre ferner wünschenswert, wenn das mit dem Bauteil in Kontakt stehende Teil der Nachweisvorrichtung als Verschleissteil austauschbar wäre.

Diese Aufgabe wird erfindungsgemäß durch eine Nachweisvorrichtung zum Nachweis von lokalen Magnetfeldern gelöst, die durch die Merkmale des Anspruchs 1 beschrieben wird.

Die kapazitiven Sensoren sind in Form eines Arrays vorzugsweise auf einem Chip angeordnet. Solche Chips gibt es beispielsweise mit einem Array aus 256 × 256 Sensoren. Der Chip ist auf der sensitiven Seite vollständig mit der Folie überzogen.

Mit der erfindungsgemäßen Nachweisvorrichtung können beispielsweise bei der Wirbelstromprüfung auftretende Magnetfelder mit hoher Ortsauflösung und Dynamik nachgewiesen werden.

Anders als bei einer piezoelektrisch arbeitenden Nachweisvorrichtung mit einer Verbundfolie, bei der Ladungsverschiebungen erfolgen, die mit einem kapazitiven Sensor nachgewiesen werden können, genügt bei der erfindungsgemäßen Nachweisvorrichtung eine einzige Folie aus chiralem Material. Hierbei bewirkt das Magnetfeld direkt eine Veränderung der dielektrischen Materialeigenschaften, d.h. der Dielektrizitätszahl, der chiralen Folie. Damit ändert sich die Kapazität der aus den kapazitiven Sensoren und der Folie aus chiralem Material bestehenden Nachweisvorrichtung direkt. Die Nachweisvorrichtung ist mit nur einer Folie einfach aufgebaut. Die Folie kann als Verschleissteil einfach ausgetauscht werden.

Die erfindungsgemäße Prüfvorrichtung kann insbesondere zur Verwendung bei der Wirbelstromprüfung metallischer Bauteile durch Ergänzung um ein Spulensystem verbessert werden. Das Spulensystem kann dabei auf dem gleichen Chip wie das Sensorenarray angeordnet sein. Durch das Spulensystem wird in ein zu prüfendes metallisches Bauteil ein Magnetfeld eingekoppelt. Durch das eingekoppelte Magnetfeld werden Wirbelströme hervorgerufen, deren Abklingen wiederum ein Magnetfeld induziert. Diese Systemantwort des Bauteils kann mit der erfindungsgemäßen Nachweisvorrichtung registriert werden.

Auf diese Weise kann ein flächiger Bereich mit hoher Ortsauflösung geprüft werden, ohne daß eine mechanische Bewegung der Nachweisvorrichtung notwendig ist. Das Prüfungsergebnis steht als Bild direkt zur Verfügung und kann auf einem Monitor visuell betrachtet werden. Außerdem ist die Bildverarbeitung mit den üblichen Bildverarbeitungsmethoden möglich.

Durch die Kombination der Nachweisvorrichtung mit einem Spulensystem kann eine sehr kleine Nachweisvorrichtung realisiert werden, die die Bauteilprüfung auch an schwer zugänglichen Stellen ermöglicht.

Die Erfindung wird im folgenden anhand der beigefügten Abbildungen näher erläutert:
- Fig. 1: zeigt den schematischen Aufbau einer Nachweisvorrichtung;
- Fig. 2: zeigt die Nachweisvorrichtung aus Fig. 1, auf die ein lokales Magnetfeld wirkt.

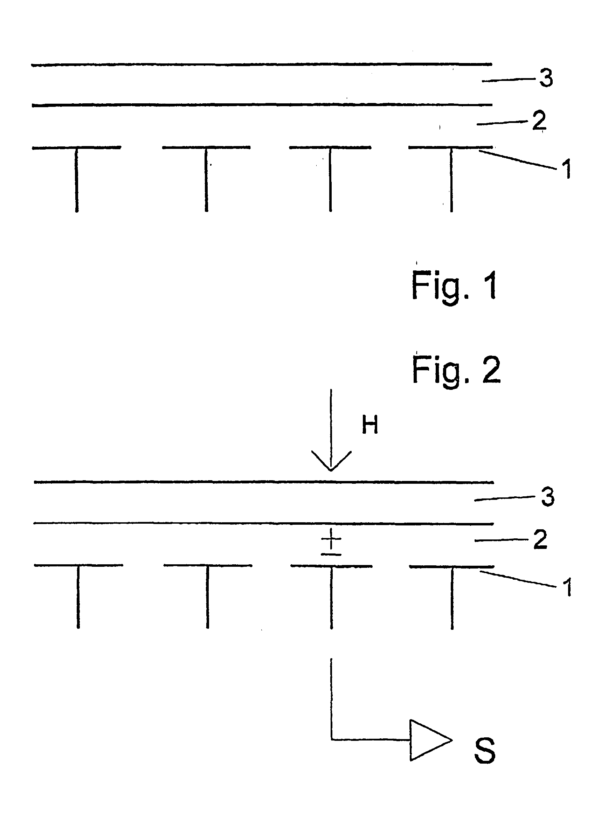

In **Fig. 1** ist ein Array aus kapazitiven Sensoren **1** dargestellt. Die kapazitiven Sensoren sind mit einer Verbundfolie bestehend aus einer piezoelektrischen Kunststoffschicht aus polarisiertem PVDF **2** sowie einer ferromagnetischen Fe-Schicht **3** überzogen.

In **Fig. 2** wird eine Nachweisvorrichtung gemäß Fig. 1 einem lokalen Magnetfeld **H** ausgesetzt. Dabei wird die ferromagnetische Fe-Schicht **3** einer Kraft unterworfen, die zu einer Verformung der darunterliegenden piezoelektrischen PVDF-Schicht **2** führt, Im piezoelektrischen Material kommt es zu einer Ladungsverschiebung. Der entsprechende kapazitive Sensor **1** liefert ein Signal **S**, das von einer üblichen Signalverarbeitung erfaßt wird. Die von den einzelnen Sensoren des Sensorarrays ausgehenden Signale werden allesamt von der Signalverarbeitung erfaßt und zu einem visuell erfaßbaren Bild verrechnet.

Die Nachweisvorrichtung ist kostengünstig herzustellen, da Chips mit Sensorarrays aus kapazitiven Sensoren mittlerweile zu niedrigen Preisen angeboten werden.

Eine solche Nachweisvorrichtung hat vielfältige Einsatzmöglichkeiten, z. B. im Bereich der Materialprüfung, da eine berührungslose, zerstörungsfreie und schnelle Prüfung metallischer Bauteile auf offene und verdeckte Risse möglich ist. Ein flächiger Bereich kann geprüft werden, ohne daß eine mechanische Bewegung in der Nachweisvorrichtung notwendig ist.

Im Unterschied zu der in **Fig. 1** und **Fig. 2** dargestellen Nachweisvorrichtung ist bei einer erfindungsgemäßen Nachweisvorrichtung aus einer Anordnung von kapazitiven Sensoren **1** und einer Folie aus chiralem Material nur eine Folie **2** erforderlich, so dass die dortige zweite Schicht **3** bei im wesentlichen gleichem Aufbau der Sensoren **1** entfällt. Die mit dem Bauteil in Kontakt tretende Folie **2** aus chiralem Material ist als Verschleissteil austauschbar.

Das lokale Magnetfeld **H** bewirkt eine Veränderung der dielektrischen Materialeigenschaften, d.h. der Dielektriztätszahl, der chiralen Folie **2**. Damit ändert sich die Kapazität der aus den kapazitiven Sensoren **1** und der Folie **2** aus chiralem Material bestehenden Nachweisvorrichtung direkt.

## Patentansprüche

1. Nachweisvorrichtung zum Nachweis von lokalen Magnetfeldern aus kapazitiven Sensoren und einer Folie, deren dielektrische Eigenschaften sich beim Einfluss der Magnetfelder ändert, wobei die kapazitiven Sensoren feststehend in einem Array einer zweidimensional flächigen Anordnung platziert sind und die Folie aus chiralem Material besteht und derart auf dem Array angeordnet ist, dass die Sensoren vollständig bedeckt sind und das Magnetfeld frei auf die dem Array gegenüberliegende Folienseite einwirkbar ist.

2. Nachweisvorrichtung nach Anspruch 1, **dadurch gekennzeichnet, dass** die Nachweisvorrichtung mit einem Spulensystem kombiniert ist.

## Claims

1. A detection device for detecting local magnetic fields comprising capacitive sensors and a film which has dielectric properties which change under the influence of the magnetic fields, the capacitive sensors being placed in a fixed array of a flat, two-dimensional arrangement and the film consisting of chiral material and being positioned in the array in such a manner that the sensors are completely covered and the magnetic field is able to act on the side of the film opposite the array.

2. A detection device in accordance with claim 1,
**characterised in that**
the detection device is combined with a coil system.

## Revendications

1. Dispositif de détection pour détecter des champs magnétiques locaux se composant de capteurs capacitifs et d'un film dont les propriétés diélectriques changent sous l'influence des champs magnétiques, les capteurs capacitifs étant placés de manière fixe dans un arrangement d'un assemblage plan bidimensionnel et le film se composant de matériau ayant des propriétés de chiralité et étant placé de telle façon sur l'arrangement que les capteurs soient entièrement recouverts et que le champ magnétique puisse agir librement sur le côté du film opposé à l'arrangement.

2. Dispositif de détection selon la revendication 1, **caractérisé en ce qu'**il est combiné avec un système de bobines.
